# EUROPEAN PATENT SPECIFICATION

(11) **EP 0 683 353 B1**
(45) Date of publication and mention of the grant of the patent: **01.09.1999**
(21) Application number: 95201146.8
(22) Date of filing: 03.05.1995
(51) Int. Cl.: F17C 13/12, G01F 23/00

(54) **Device for controlling liquid level and driving a pump for its delivery**
Apparat zur Flüssigkeitsniveauregelung und zum Antrieb eines Lieferpumpe
Dispositif pour contrôler le niveau de liquide et pour entraîner une pompe pour son alimentation

(30) Priority: 09.05.1994 IT MI940906
(43) Date of publication of application: 22.11.1995
(73) Proprietor: Pirovano, Angelo, 20013 Magenta (Milano) (IT)
(72) Inventor: Pirovano, Angelo, I-20013 Magenta, Milano (IT); Gallingani, Sergio, I-42100 Reggio Emilia (IT); Urbinati, Enrico Ubaldo, I-42100 Reggio Emilia (IT)
(74) Representative: Riccardi, Sergio

(56) References cited:
- EP-A- 0 519 794
- BE-A- 1 003 288
- FR-A- 2 645 621
- US-A- 4 924 703

## Description

The present invention concerns a device for controlling the level of a liquid medium,and particularly a liquefied gas, contained into a proper bottle, said device being further adapted to drive, or even interrupt,liquid delivery from inside said bottle.

It is known to use liquefied gas contained into tanks or bottles of quite large dimensions, for feeding heating plants for domestic or industrial use,hot water plants, gas hot plates and the like. This is particularly used at locations where placing municipal piping for natural gas is not possible or economically not convenient, such as at isolated or inaccessible locations. Said tanks, as it is known, are periodically filled using a proper delivery pump which conveys gas contained into the reservoir of a tank truck to said containing bottle.

It is known also, in this connection, that the filling step is a phase during which one must pay attention so as to deliver the selected amount of gas and particularly not to exceed the 80% percentage of tank filling. This percentage, in fact, is considered the highest percentage at which it is advisable to fill the bottle because of safety reasons.

Hitherto said filling operation has been carried out manually and interruption of delivery pump working has been entrusted to operator ability and attention only. Thus it is clear that a very small inattention by said operator was enough for obtaining a filling higher than the maximum threshold.

EP-A-0 519 794, which is considered the closest prior art and on which the preamble of claim 1 is based, discloses a controlling device for filling and automatic stopping at a pre-determined level for LPG tanks. The halting of the tank filling is caused by a temperature - measuring probe actuating proper means when the measured temperature drops below the ambient temperature. The above system is inherently unreliable because the temperature could also not drop abruptly and, as a consequence, the delivery of gas could continue. Further the device according to EP-A-0 519 794 needs a man untightening a closure member (30 in Figure 2 of the above prior patent) before starting the delivery and tightening such a member as soon as the delivery has been completed. Obviously the above operation is highly risky. Finally the known device does not provide for a level gauge connected to or built-in it.

Thus it is the main object of the present invention, in view of the drawbacks found in the hitherto known devices, to provide a device for controlling the level of a liquid medium, and more particularly a liquefied gas, and for driving a pump for its delivery which is highly reliable and not based on the capability, skill and attention of the appropriate staff for delivery and further which avoids passage of electric current in proximity of the tank.

In particular the controlling and driving assembly according to the present invention is able of indicating, in a very precise and reliable way, when the liquid level in the tank has reached a maximum selected level and instantaneously interrupting delivery of said liquid at that level.

The above mentioned objects are reached brilliantly by a controlling and driving device having the features set forth in the characterizing part of claim 1 or claim 2. Further advantageous characteristics are indicated in the dependent claims.

It is further to be pointed out that this invention will be described and shown in connection with a level gauge for liquefied gas bottle of the same type described in EP-A-0292060, even if it is equally compatible with a different type of gauge or,it is possible to use the inventive device irrespective of any level gauge.

In the various Figures of the annexed drawings relating to a particular embodiment of the device according to the invention:
Fig.1 is a partial longitudinal sectional view of a level gauge of the prior art to which a level detecting means according to an embodiment of the present invention is joined;
Fig.2 is a top view of the top part of the level gauge of Fig. 1;
Fig.3 is a rather diagrammatic cross-sectional view of the transmitting element or means;
Fig.4A is a block diagram of a passive type level detecting element or means;
Fig.4B is a block diagram of an active level detecting element or means;
Fig.5A is a block diagram of a cable transmitting means or element;
Fig.5B is a block diagram of a radio transmitting means or element;
Fig.6A is a block diagram of a cable receiving means or element;
Fig.6B is a block diagram of a radio receiving means or element;and
Fig.7 is a block diagram of a battery charger.

Obviously,the same or similar components or blocks or that however work in a similar way have been indicated by similar reference characters in the various Figures.

The controlling and driving device of the present invention substantially is constituted by an assembly composed by three main elements: a first element or level detecting means 30;30', of an active or passive type,respectively;a second element or cable transmitting means and radio transmitting means 50 and 50', respectively; and a third element or cable receiving means and radio receiving means 80 and 80',respectively. Obviously a fourth element or battery charger means 100 could be provided if both transmitting means and receiving means are of the radio type.

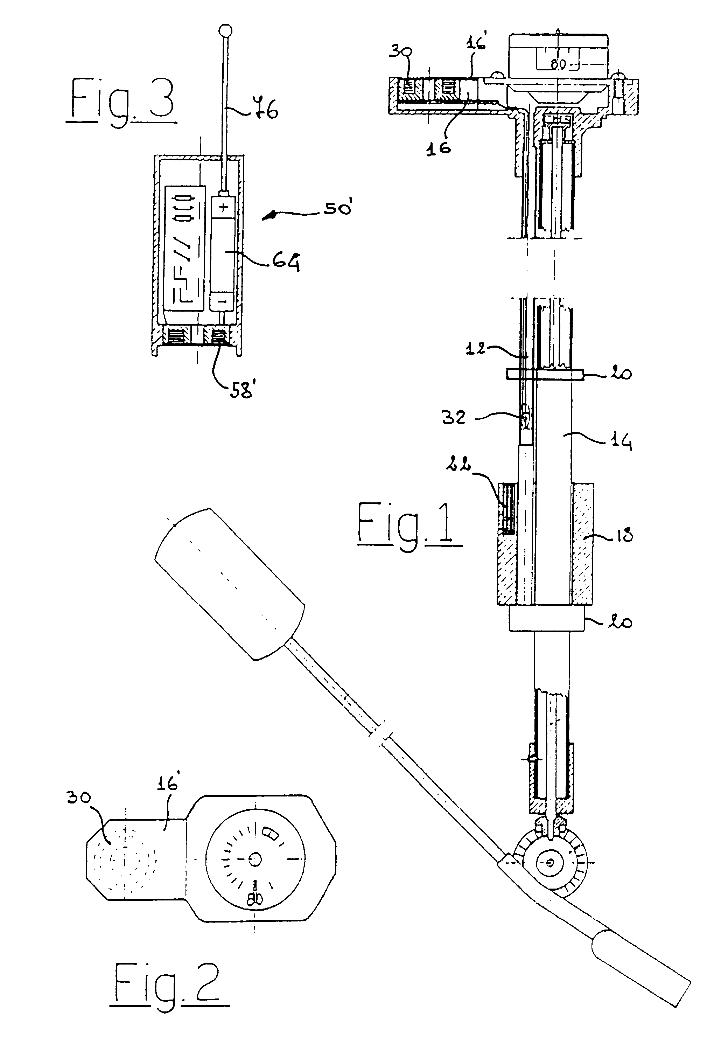

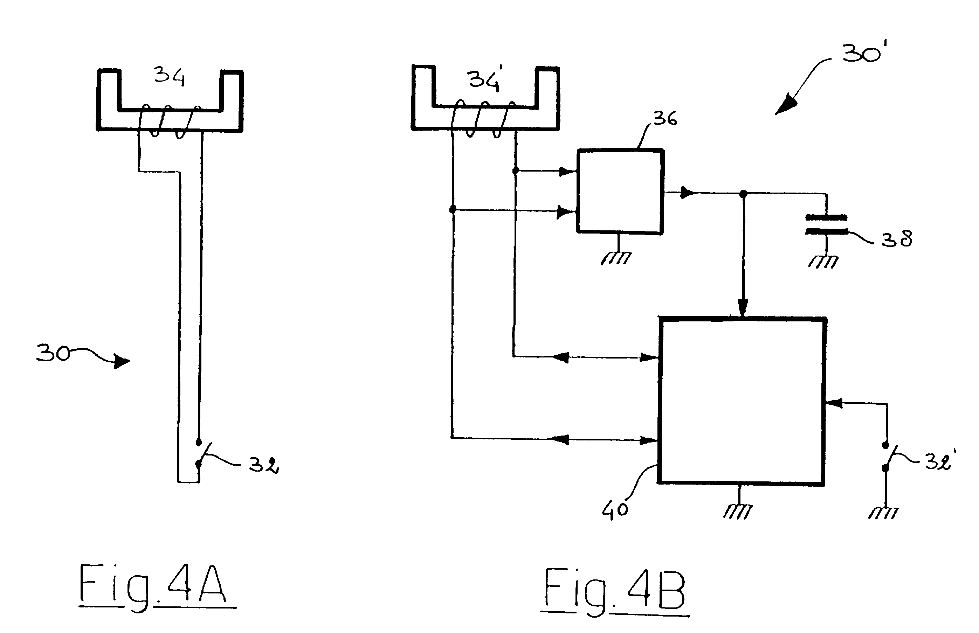

As it is evident in particular from an examination of Figure 1, the mechanical part of the inventive device, in its particular described embodiment, substantially consists of a hollow bar 12 the axis thereof being placed substantially parallel to the axis of the extended housing 14 of the known level gauge. Said hollow bar 12 communicates with a body 16 having a top surface 16' outside of the bottle substantially and preferably planar and inside said body 16 an inductance 34;34' is placed, said inductance being better explained below. On the outside of said hollow bar 12 there is a floating means 18 slidable around said bar 12,and also preferably around said housing 14, starting from a first position in which the float is completely lowered,said position corresponding to a minimum liquid medium level or liquid medium absence, to a final position in which it is completely lifted, said position corresponding to a maximum liquid level (for example, 80%). Of course proper means 20 for limiting the upper and lower stroke are provided, said means being settable according to the bottle size and shape in which said controlling and driving device is placed, and in particular its level gauge described below. Integral to said floating means 18 is a magnet means 22 properly placed in proximity to said hollow bar 12. Said magnet means 22, in the completely lifted float position, is adapted to actuate a proper magnetic switch 32;32' (see Fig.4A, 4B) of the level detector 30;30', respectively.

The passive level detector 30 (see Fig.4A) is comprised of an inductance 34 formed by a winding being wound on an opened ferromagnetic material core with its pole pieces facing outwardly, and said magnetic switch 32 which, when liquid reaches the selected maximum level (floating means 18 in the completely lifted position) short-circuits the winding causing an impedance change.

The active level detector 30' (see Fig.4B) is comprised, as the passive detector 30,of an inductance 34' and further a double half-wave rectifier 36 which charges capacitor 38 with a voltage adapted to power a microcontroller 40 which, by coded current pulses circulating into inductance 34', conveys to the transmitter information about magnetic switch 32'status and possibly further status information such as, for example, the last refueling date, bottle code number and size, overhaul date, etc. Microcontroller 40 is programmed as to be able to count the time intervals which separate the wave trains, by two of its pins being used as inputs, thus being able to receive messages. For answering to this messages, said two pins, now used as outputs, are automatically switched to the low logic level. This cause a timed increase of oscillator 54;54' frequency of transmitter 50;50' which, properly modified, represents the answer message.

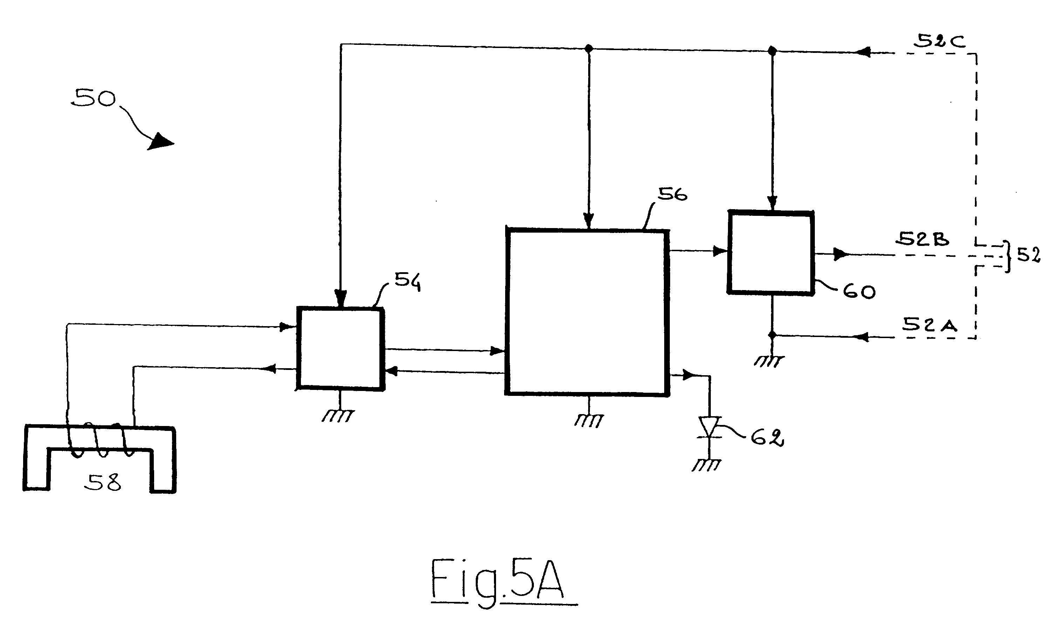

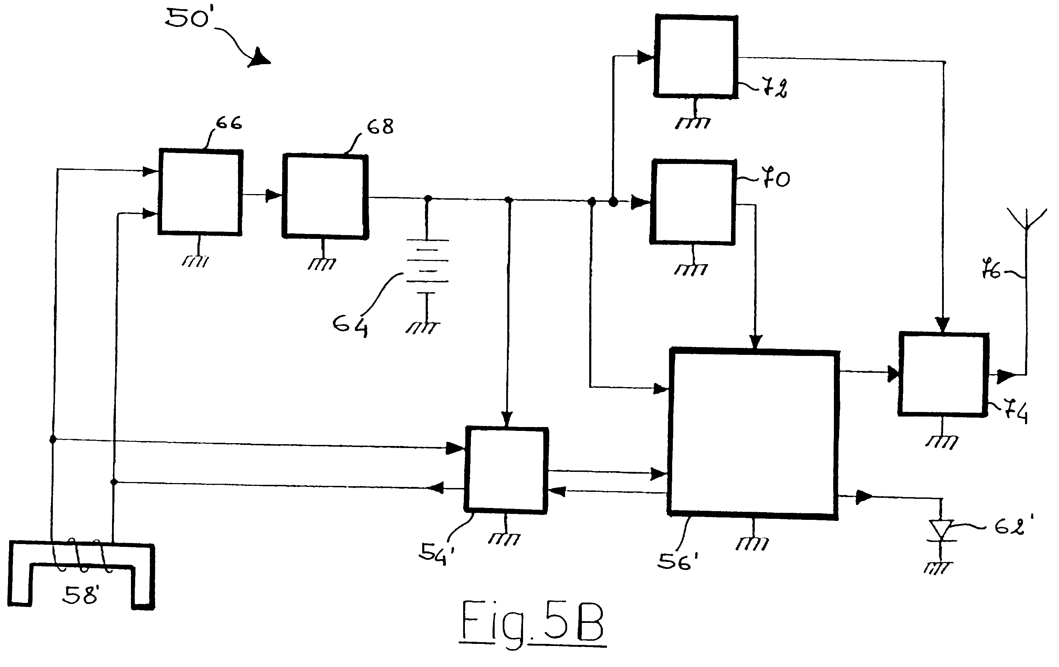

Transmission from bottle to tank truck could be carried out by cable or ether (by radio waves) and for this reason two transmitters are provided: a cable transmitter 50 (Fig.5A) and a radio transmitter 50' (Fig.5B).

Anyway it is important to point out that, as will be more evident hereinafter, the communication or dialogue between level detector 30;30' and transmitter 50;50' is carried out without any electric contact but by galvanic coupling, making the whole device absolutely safe and reliable.

Cable transmitting means 50 (Fig.5A) is connected to the receiving means 80 by a cable 52 provided with three wires 52A,52B,52C,being respectively for negative power, signal and positive power. It is comprised of an oscillator 54 energized by microcontroller 56 which communicates, by inductance 58, with level detector. Preferably,a light emitting diode 62 is provided. Intermittent blinking of said diode 62 could indicate, for example, that the tank is not full and thus delivering can go on while a stationary light of said diode, on the contrary, could indicate a full tank situation and thus a delivery interruption. Microcontroller 56 generates a recognition code and a level code which is transmitted by impedance adaptor 60 which is able to control cables of a proper length. Message to send to the tank truck is coded modulating the distance between a pulse and the next one.

Radio transmitter means 50' (Fig.5B) is fed by a proper battery 64,preferably chargeable by voltage inducted at the ends of inductance 106 by oscillator 102 of a proper battery charger means 100. This alternate current is rectified by a diode bridge 66 feeding constant current generator 68 and provides the proper current for charging said battery 64. Means or block 70 works for maintaining stable voltage which feeds microcontroller 56'. Block 72 is a positive voltage booster which lifts and stabilizes at 12 Volt the voltage feeding radio frequency transmitter 74 with antenna 76.The operation of the other blocks is the same as blocks of cable transmitter 50 described above.

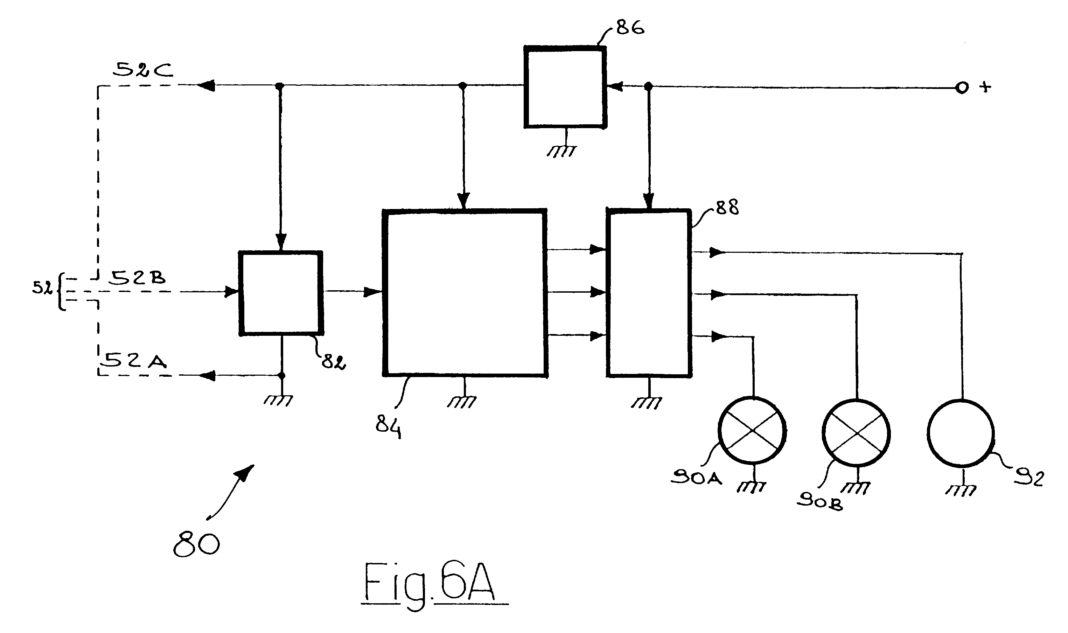

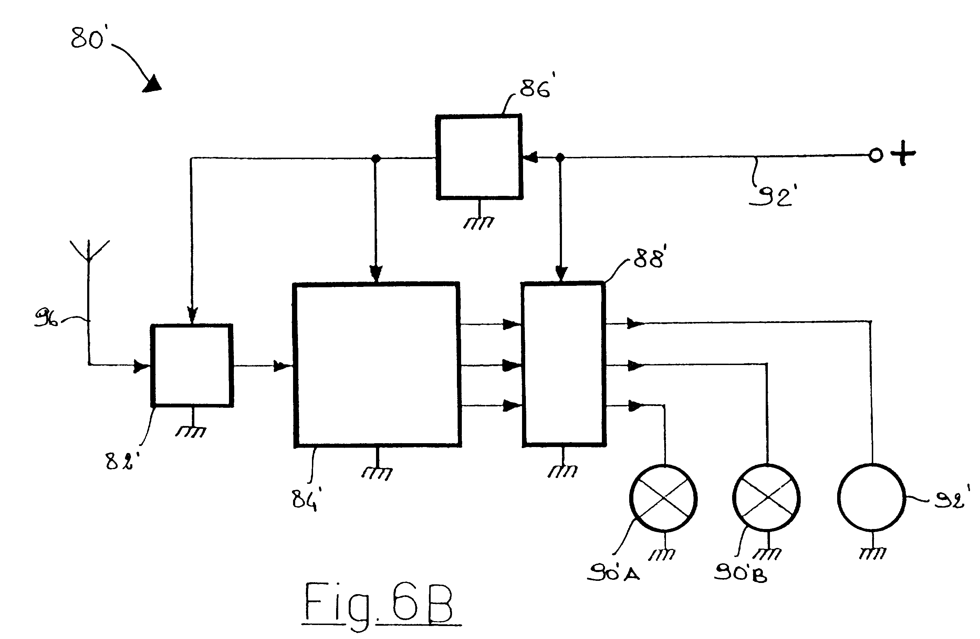

The third element or means of said assembly embodying the device according to the invention is comprised of a receiving element or means 80;80' mountable on the tank truck. Cable receiver 80 (Fig.6A) and radio receiver 80' (Fig.6B) differ from each other just for the input stage of the received signal. Level translator 82 matches the received signal through wire 52B to a level which is consistent with microcontroller input 84.Block or means 82' is a radio receiver provided with an antenna 96 emitting a signal having an amplitude corresponding to microcontroller 84' input. Microcontroller 84;84' is programmed in such a way as to decode the received signal, check if it is free from errors caused by interferences experienced during transmission, and drive,by power interface 88;88', pump 92;92' and signaling lamps 90A,90B;90'A,90'B. Blinking of lamp 90A;90'A means reception of a not full tank signal, while lamp 90A;90'A continuously lighted means that a full tank signal has been received. If lamp 90B;90'B is lightening, this means that pump is not working because of disturbed signals. Block or means 86;86' lowers and stabilizes the tank truck battery voltage. Said voltage power feeds blocks 84' and 82' in the radio receiver 80'. In cable receiver 80, in addition to blocks 84 and 82, said voltage also feeds transmitter 50 through wire 52C.

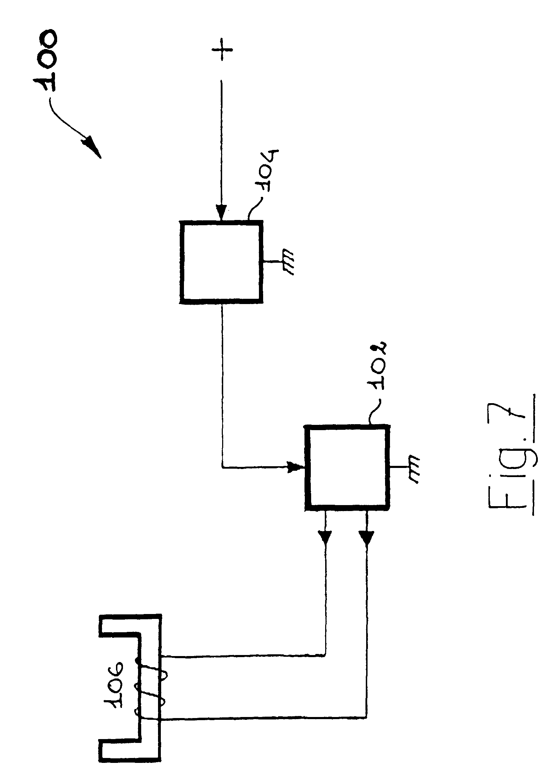

As above referred, when a radio transmission data apparatus, instead of a cable one,is used, and particularly in case in which battery 64 of radio transmitter 50' is a rechargeable type, it has been believed convenient to place a proper and appropriate battery charger means 100 to be installed on the tank truck. Said battery charger means 100 (Fig.7) consists of an oscillator 102 feeded by the tank truck battery by a voltage stabilizer 104. The alternate current into inductance 106 induces electromotive force in said inductance 58' of said transmitter 50, said force sufficing for obtaining the required charge current for said battery 64. It is important to point out that using this recharging system it is possible to avoid use of electric contacts making easy to enclose the transmitter into a sealed box.

In view of the above description the advantages obtained by the device according to the invention are clear. More particularly, it is possible to obtain in a very precise, reliable and safe way an information relative to the maximum level reached by a liquid medium,and particularly a liquefied gas, contained into a proper tank or bottle (not shown). The device is also adapted for interrupting instantaneously delivery of said liquid, or liquefied gas, when said selected maximum level into the bottle has been reached. This happens without going by capability, skill and attention of the appropriate staff for delivery.

In addition it is clear that each of the elements, generally described by block diagrams, of the assembly which forms the device according to the invention, could be constructed by substituting any element arrangement working as the specific block to each single block itself. Further, while a transmission between detector and transmitter by inductive coupling has been believed more convenient and safer, it is clear that the same result can be obtained also by a socket and a plug or jack.

## Claims

1. Device for controlling liquid or liquefied gas level in a bottle and for driving a pump for its delivery, said device comprising: level detecting means (30; 30') emitting information signals, signal transmitting means (50; 50') and signal receiving means (80; 80') actuating suitable delivery controlling and/or signaling means, characterized in that said level detecting means is a passive type one and it is comprised of an inductance (34) formed by a winding being wound on an opened ferromagnetic material core with its pole pieces facing outwardly, and a magnetic switch (32) which, when liquid reaches the selected maximum level, short-circuits the winding and cause an impedance change which is detectable from outside the tank.

2. Device for controlling liquid or liquefied gas level in a bottle and for driving a pump for its delivery, said device comprising: level detecting means (30; 30') emitting information signals, signal transmitting means (50; 50') and signal receiving means (80; 80') actuating suitable delivery controlling and/or signaling means, characterized in that said level detecting means (30') is an active type one and it is comprised of an inductance (34') and a double half-wave rectifier (36) which charges a capacitor (38) with a voltage adapted to power a microcontroller (40) and conveys to said transmitting means (50') information about the status of a magnetic switch (32') which, when it is closed, indicates a liquid level equal to the selected maximum one.

3. Device according to claim 2, characterized in that the information conveyed between said microcontroller (40) and said transmitter (50') is carried out by coded current pulses circulating into inductance (34') and in that information provided by the detecting means (30') are comprised of other status information such as, for example, the last refueling date, bottle code number, bottle size, and overhaul date.

4. Device according to any of claims 1-3, characterized in that said magnetic switch (32; 32') is placed into a hollow bar (12) closed at its lower end, extending into the tank containing liquid medium, or liquefied gas, said bar being in communication at its upper end with a body (16) outside the tank which in turn accommodates at least said inductance (30; 30') with pole pieces facing outwardly and the upper surface thereof (16') is connectable with the lower surface of the transmitting means (50; 50'); switching of said magnetic switch (32; 32') being obtained by a proper magnet means (22) integral to a proper floating means (18) slidable outwardly of said hollow bar (12) between a first position corresponding to liquid absence or liquid at a minimum level, and an end position corresponding to a maximum liquid level in which said magnet means (22) is at said magnetic switch means (32; 32').

5. Device according to any of claims 1-4 characterized in that said transmitting means (50) comprises: a cable (52) provided with wires (52A; 52B; 52C) for negative power, signal and positive power, respectively; an oscillator (54) activated by microcontroller (56) communicating, by inductance (58), with the level detector (30; 30'); one or more indicating diodes (62) and an impedance adaptor (60) by which the level signal is transmitted.

6. Device according to any of claims 1-5, characterized in that said signal transmitting means (50') comprises: a battery (64); a means (70) maintaining stable the voltage powering a microcontroller (56'), a positive voltage booster means lifting and stabilizing voltage powering a radio frequency transmitter (74) provided of an antenna (76); an oscillator (54') activated by microcontroller (56') connected, by an inductance (58'), with said level detector (30; 30'), and one or more indicating diodes.

7. Device according to any of claims 1-6, characterized in that said signal receiving means (80) comprises: a cable (52) with wires (52A, 52B, 52C), a level translator (82) matching the received signal, the output thereof being connected to a microcontroller (84) programmed as to decode the received signal and drive, through a proper power interface (88), a pump (92) and signaling lamps (90A, 90B), and a means (86) lowering and stabilizing the tank truck battery voltage which feeds said microcontroller (84), level translator (82) and transmitter (50).

8. Device according to any of claims 1-7, characterized in that said signal receiving means (80') comprises: a radio receiver (82') emitting at its output a signal of a proper amplitude for guiding the input of a microcontroller (84') which decodes the received signal and drives, through interface (88'), a pump (92') and signaling lamps (90'A, 90'B); and a means (86') which lowers and stabilizes the tank truck battery voltage which, in turn, feeds said microcontroller (84') and radio receiver (82').

9. Device according to claim 6, characterized in that said battery (64) is rechargeable by the voltage inducted at the ends of an inductance (106) having pole pieces facing outwardly from oscillator (102) of a proper battery charger means (100) further comprising a voltage stabilizer (104) being connected to said oscillator (102); said voltage inducted at the ends of said inductance (106) being rectified by a proper diode bridge (66) feeding a constant current generator (68) which in turn delivers the right current for charging said battery (64).

10. Device according to any of claims 1-9, characterized in that connection between said transmitter (50; 50') and said receiver (80; 80') is inductive.

11. Device according to any of claims 1-10, characterized in that it further comprises a level gauge.

## Patentansprüche

1. Apparat zur Flüssigkeits- oder Flüssiggas-Niveauregelung in einer Flasche und zum Antrieb einer Lieferpumpe, enthaltend: Eine Niveaumesseinrichtung (30; 30'), die Informationssignale abgibt, eine Signalübertragungseinrichtung (50; 50') und eine Signalempfangseinrichtung (80; 80'), die eine passende Antriebsregel- und/oder Signaleinrichtung in Gang setzt,
dadurch gekennzeichnet,
dass die Niveaumesseinrichtung ein passiver Typ ist und eine Spule (34) enthält, die aus einer Wicklung besteht, die auf einen offenen ferromagnetischen Materialkern gewickelt ist, dessen Pole nach außen gerichtet sind, und dass ein magnetischer Schalter (32), welcher, wenn die Flüssigkeit das ausgewählte höchste Niveau erreicht, die Wicklung kurzschließt und eine Impedanzänderung bewirkt, die von außerhalb des Tanks messbar ist.

2. Apparat zur Flüssigkeits- oder Flüssiggas-Niveauregelung in einer Flasche und zum Antrieb einer Lieferpumpe, enthaltend: Eine Niveaumesseinrichtung (30; 30'), die Informationssignale abgibt, eine Signalübertragungseinrichtung (50; 50') und eine Signalempfangseinrichtung (80; 80'), die eine passende Antriebsregel- und/oder Signaleinrichtung in Gang setzt,
dadurch gekennzeichnet,
dass die Niveaumesseinrichtung (30') ein aktiver Typ ist und eine Induktivität (34') und einen Doppelhalbwellengleichrichter (36) enthält, der einen Kondensator (38) auf eine zur Speisung eines Mikrocontrollers (40) ausreichende Spannung auflädt und Informationen über den Zustand eines magnetischen Schalters (32') auf die Übertragungseinrichtung (50') überträgt, welcher, wenn er geschlossen ist, anzeigt, dass das Flüssigkeitsniveau gleich dem ausgewählten Höchstwert ist.

3. Apparat nach Anspruch 2,
dadurch gekennzeichnet,
dass die zwischen dem Mikrocontroller (40) und der Übertragungseinrichtung (50') übertragene Information durch kodierte, in der Spule (34') kreisende Stromimpulse befördert wird und dass die durch die Messeinrichtung (30') gelieferten Informationen aus anderen Zustandsinformationen besteht, wie zum Beispiel das Datum des letzten Betankens, die Flaschen-Codenummer, die Flaschengröße und das Überholdatum.

4. Apparat nach einem der Ansprüche 1 bis 3,
dadurch gekennzeichnet,
dass der magnetische Schalter (32; 32') in einen an seinem unteren Ende geschlossenen hohlen Stab (12) eingesetzt ist, der sich in den das flüssige Medium oder das Flüssiggas enthaltenden Tank erstreckt und an seinem oberen Ende mit einem Anbau (16) außerhalb des Tanks in Verbindung steht, welcher wenigstens die Spule (30; 30') mit nach außen gerichteten Polen enthält und dessen Oberseite (16') mit der Unterseite der Übertragungseinrichtung (50; 50') verbindbar ist, wobei der magnetische Schalter (32; 32') durch einen geeigneten Magneten (22) eingeschaltet wird, der in einem Schwimmer (18) enthalten ist, der außerhalb des hohlen Stabes (12) zwischen einer ersten, dem Fehlen von Flüssigkeit oder dem niedrigsten Flüssigkeitsniveau entsprechenden Stellung und einer dem höchsten Flüssigkeitsniveau entsprechenden Endstellung gleiffähig ist, in welcher der Magnet (22) sich in Höhe des magnetischen Schalters (32; 32') befindet.

5. Apparat nach einem der Ansprüche 1 bis 4,
dadurch gekennzeichnet,
dass die Übertragungseinrichtung (50) enthält: Ein Kabel (52) mit Adem (52A; 52B; 52C) für einen negativen Stromanschluß, für ein Signal und für einen posi-tiven Stromanschluß; einen Oszillator (54), der durch den Mikrocontroller (56) in Gang gesetzt wird, der über die Spule (58) mit der Niveaumesseinrichtung (30; 30') in Verbindung steht; eine oder mehrere Anzeigedioden (62) und ein Impedanzadapter (60), durch den das Niveausignal übertragen wird.

6. Apparat nach einem der Ansprüche 1 bis 5,
dadurch gekennzeichnet,
dass die Signalübertragungseinrichtung (50') enthält: Eine Batterie (64); eine Einrichtung (70) zum Stabilisieren der Betriebsspannung eines Mikrocontrollers (56'); eine Einrichtung (72) zum Erhöhen und Stabilisieren einer positiven Zusatzspannung für einen Radiofrequenzsender (74), der mit einer Antenne (76) versehen ist; einen Oszillator (54'), der durch den Mikrocontroller (56') in Gang gesetzt wird, der über die Spule (58') mit der Niveaumesseinrichtung (30; 30') in Verbindung steht, und eine oder mehrere Anzeigedioden (62').

7. Apparat nach einem der Ansprüche 1 bis 6,
dadurch gekennzeichnet,
dass die Signalempfangseinrichtung (80) enthält: Ein Kabel (52) mit Adern (52A; 52B; 52C); einen Niveauumsetzer (82), der die empfangenen Signale vergleicht und dessen Ausgang mit einem Mikrocontroller (84) verbunden ist, der so programmiert ist, dass er die empfangenen Signale dekodiert und über eine geeignete Anpassungseinrichtung (88) eine Pumpe (92) und Signallampen (90A, 90B) antreibt, und eine Einrichtung (86) zum Herabsetzen und Stabilisieren der Tankwagen-Batteriespannung, welche den Mikrocontroller (84), den Niveauumsetzer (82) und die Übertragungseinrichtung (50) speist.

8. Apparat nach einem der Ansprüche 1 bis 7,
dadurch gekennzeichnet,
dass die Signalempfangseinrichtung (80'), enthält: Einen Radioempfänger (82'), der an seinem Ausgang ein Signal mit einer geeigneten Amplitude zur Eingabe in den Eingang eines Mikrocontrollers (84') abgibt, welcher das empfangene Signal dekodiert und über eine Anpassungseinrichtung (88') eine Pumpe (92') und Signallampen (90'A, 90'B) antreibt, und eine Einrichtung (86') die die Tankwagen-Batteriespannung herabsetzt und stabilisiert, welche den Mikrocontroller (84') und den Radioempfänger (82') speist.

9. Apparat nach Anspruch 6,
dadurch gekennzeichnet,
dass die Batterie (64) durch eine Spannung aufladbar ist, die durch einen Oszillator (102) einer geeigneten Batterieladeeinrichtung (100) an den Enden einer Spule (106) mit nach außen gerichteten Polen induziert wird, wobei ein Spannungsstabilisator (104) mit dem Oszillator (102) verbunden ist; daß ferner die an den Enden der Spule (106) induzierte Spannung durch eine geeignete Diodenbrücke (66) gleichgerichtet wird und einen Konstantstromgenerator (68) speist, der den passenden Strom zum Aufladen der Batterie (64) liefert.

10. Apparat nach einem der Ansprüche 1 bis 9,
dadurch gekennzeichnet,
dass die Verbindung zwischen der Übertragungseinrichtung (50; 50') und dem Empfänger (80; 80') induktiv ist.

11. Apparat nach einem der Ansprüche 1 bis 10,
dadurch gekennzeichnet,
dass er ferner ein Niveaueichmaß enthält.

## Revendications

1. Dispositif de commande du niveau d'un liquide ou d'un gaz liquéfié dans une bouteille et pour commander une pompe de distribution, ledit dispositif comprenant : des moyens de détection de niveau (30, 30') émettant des signaux d'information, des moyens de transmission des signaux (50, 50') et des moyens de réception des signaux (80, 80') agissant sur le moyen de commande de distribution et/ou de signalisation, caractérisé en ce que lesdits moyens de détection de niveau sont de type passif et comprennent une bobine d'induction (34) formée par enroulement sur un noyau ferromagnétique ouvert dont les pièces polaires font saillie vers l'extérieur, et un contacteur magnétique (32) qui, lorsque le liquide atteint le niveau maximum sélectionné, court-circuite l'enroulement et provoque un changement d'impédance qui est détectable à l'extérieur du réservoir.

2. Dispositif de commande du niveau de liquide ou de gaz liquéfié dans un réservoir et de commande d'une pompe pour la distribution de liquide, ledit dispositif comprenant des moyens de détection (30, 30') émettant des signaux d'information, des moyens de transmission des signaux (50, 50') et des moyens de réception des signaux (80, 80') agissant sur le moyen de commande de distribution et/ou de signalisation caractérisé en ce que les moyens de détection de niveau (30') sont de type actif et comprennent une bobine d'induction (34') et un rectifieur (36) a double alternance qui charge un condensateur (38) de tension adaptée à l'alimentation d'un microprocesseur (40) et transmet l'information au sujet de l'état d'un contacteur magnétique (32') audit moyen de transmission (50'), le contacteur magnétique (32') lorsqu'il est fermé indiquant un niveau de liquide égal au niveau maximum sélectionné.

3. Dispositif selon la revendication 2 caractérisé en ce que l'information transmise entre ledit MICROPROCESSEUR (40) et ledit émetteur (50') est porté par des impulsions codées de courant circulant dans la bobine (34') et en ce que l'information fournie par les moyens de détection (30') comprend une autre information de l'état telle que, par exemple, la dernière date de remplissage, le code de la bouteille, la taille de la bouteille et la date de révision.

4. Dispositif selon l'une des revendications 1 à 3 caractérisé en ce que ledit contacteur magnétique (32, 32') est placé dans une barre creuse (12) fermée à son extrémité inférieure, s'étendant dans le réservoir contenant le milieu liquide, ou le gaz liquéfié, ladite barre étant en communication à son extrémité supérieure avec un corps (16) extérieur au réservoir qui reçoit au moins lesdites bobines d'induction (30, 30') avec les pièces polaires tournées extérieurement et la surface supérieure de celle-ci (16') étant connectée avec la surface inférieure des moyens de transmission (50, 50'); le basculement dudit contacteur magnétique (32, 32') étant obtenu par un aimant adapté (22) intégré au moyen de flottaison (18) coulissant à l'extérieur de ladite barre creuse (12) entre une première position correspondant à l'absence de liquide ou niveau minimal de liquide et une position extrême correspondant au niveau maximum de liquide dans lequel ledit aimant (222) et inclus dans le contacteur magnétique (32, 32').

5. Dispositif selon l'une des revendications 1 à 4 caractérisé en ce que ledit moyen de transmission (50) comprend un câble (52) incluant des conducteurs (52A, 52B, 52C) respectivement pour une tension négative, un signal, et une tension positive; un oscillateur (54) activé par un microprocesseur (56) communiquant par la bobine d'induction (58) avec le détecteur de niveau (30, 30'); une ou plusieurs diodes (62) d'affichage et un adaptateur d'impédance (60) par lequel ledit niveau de signal est transmis.

6. Dispositif selon l'une des revendications 1 à 5, caractérisé en ce que lesdits moyens de transmission de signaux (58) comprennent : une batterie (64); des moyens (70) maintenant stable la tension d'alimentation d'un microprocesseur (56'), des moyens d'alimentation en tension positive élevant et stabilisant la tension alimentant un émetteur à radio fréquence (74) pourvu d'une antenne (76), un oscillateur (54') activé par le microprocesseur (56') connecté par une bobine d'induction (58'), ledit détecteur de niveau (30, 30') et une ou plusieurs diodes d'affichage.

7. Dispositif selon l'une des revendications 1 à 6 caractérisé en ce que ledit récepteur (80) comprend un câble (52) avec des conducteurs (52A, 52B, 52C) , un convertisseur de niveau (82), traitant le signal reçu, dont la sortie est reliée à un microprocesseur (84) programmé pour décoder le signal reçu et commander à travers son interface propre (88) une pompe (92), des lampes d'affichage (90A, 90B) et des moyens (86) abaissant et stabilisant la tension de la batterie du réservoir qui alimente ledit microprocesseur (84), le convertisseur de niveau (82), et l'émetteur (50).

8. Dispositif selon l'une des revendications 1 à 7 caractérisé en ce que lesdits moyens de réception (80') comprennent un récepteur radio (82') émettant à sa sortie un signal d'amplitude convenable pour guider l'entrée d'un microprocesseur (84) lequel qui décode le signal reçu et commande à travers l'interface (88') une pompe (92') et des lampes d'affichage (90A, 90B); et un moyen (86) qui abaisse et stabilise la tension de la batterie de réservoir, laquelle à son tour alimente ledit microprocesseur (84') et le récepteur radio (82').

9. Dispositif selon la revendication 6 caractérisé en ce que ladite batterie (64) est rechargeable par la tension induite aux extrémités de la bobine d'induction (106) dont les pièces polaires font saillie extérieurement, à partir de l'oscillateur (102) d'un chargeur de batterie convenable (100) comprenant de plus un stabilisateur de tension (104), connecté audit oscillateur (102); ledit voltage induit aux extrémités de ladite bobine d'induction (106) étant rectifiés par un pont de diodes (66) alimentant un générateur de courant continu (68) qui à son tour délivre le courant convenable pour charger ladite batterie (64).

10. Dispositif selon l'une des revendications 1 à 9 caractérisé en ce que la connexion entre ledit émetteur (50, 50') et ledit récepteur (80, 80') est inductive.

11. Dispositif selon l'une des revendications 1 à 10 caractérisé en ce qu'il comprend de plus une jauge de niveau.
